# EUROPÄISCHE PATENTANMELDUNG

(11) **EP 1 374 979 A2**
(43) Veröffentlichungstag der Anmeldung: **02.01.2004**
(21) Anmeldenummer: 03013600.6
(22) Anmeldetag: 16.06.2003
(51) Int. Cl.: B01D 63/02, B01D 63/06, B01D 65/00

(54) **Separationsmodul, Verfahren zu seiner Herstellung sowie seine Verwendung**

(30) Priorität: 21.06.2002 DE 10227721
(71) Anmelder: Bayer Aktiengesellschaft, 51368 Leverkusen (DE); Hermsdorfer Institut für Technische Keramik e.V., 07629 Hermsdorf (DE)
(72) Erfinder: Nickel, Andreas, 58300 Wetter (DE); Stange, Olaf, Dr., 50670 Köln (DE); Voigt, Ingolf, Dr., 07743 Jena (DE); Fischer, Gundula, 07646 Stadtroda (DE); Stahn, Michael, 07629 Hermsdorf (DE); Köhler, Birgit, 04626 Polterstein (DE)

(57) **Zusammenfassung**

1. Separationsmodul, Verfahren zu seiner Herstellung sowie seine Verwendung
2.1. Der Erfindung liegt die Aufgabe zugrunde, die Mängel des Standes der Technik, wie Instabilität, Unmöglichkeit der Innenbeschichtung rohrförmiger Gebilde oder unbeeinflussbarer Abstand von Filterelementen bei einem Separationsmodul mit bezogen auf die Parameter des speziellen Anwendungsfalles optimaler Raumausnutzung zu beheben.
2.2. Diese Aufgabe wird durch einen Separationsmodul gelöst, welcher mindestens ein Bündel keramischer Kapillaren (9) enthält, bei dem zur Steuerung des Stofftransportes und der Strömung im Separationsmodul ein bestimmter Abstand zwischen den Kapillaren (9) durch Fügen eingestellt ist.
2.3. Die Erfindung ist in vielfältiger Weise bei der Stofftrennung durch Filtration auch in Verbindung mit weiteren Maßnahmen der chemischen Verfahrenstechnik verwendbar.

## Beschreibung

Die Erfindung betrifft einen Separationsmodul, der Bündel keramischer, kapillarförmiger Filterelemente enthält sowie Verfahren zu seiner Herstellung und eine Verwendung desselben.

Keramische Filterelemente besitzen einen asymmetrischer Aufbau, bei dem auf einem porösen keramischen Träger (Support) dünne Membranschichten mit ein oder mehreren Zwischenschichten aufgetragen sind. Dabei gibt der poröse keramischer Träger die äußere Form und die mechanische Stabilität vor. Übliche Ausführungsformen sind:

### Rohre

Rohre werden durch Extrusion hergestellt. Verbreitetste Dimensionen sind:
1-Kanalrohre Außendurchmesser(AD)/Innendurchmesser(ID) = 10 mm/7 mm,
7-Kanalrohre AD/Kanaldurchmesser(KD) = 25 mm/7 mm,
19-Kanalrohre AD/KD = 25 mm/3,5 mm und größer.
Die Länge der technisch eingesetzten Filterelemente beträgt bis 1,00 m in manchen Fällen bis 1,20 m.

### Waben

Einen extrudierten Körper, bestehend aus sehr vielen Kanälen (rund oder eckig) mit dünnen Wandstärken bezeichnet man als Wabenkörper. In einem solchen Körper kann man große Membranflächen in kleinstem Raum unterbringen. Die Wandstärke der Kanäle ist jedoch zu dünn, um Permeat nach außen abzuführen. Deshalb werden einzelnen Kanäle wechselseitig verschlossen und für die Permeatabfuhr verwendet (EP 0 306 350, EP 0 433 582, EP 0 923 983 sowie WO 00/50156).

### Platten

Platten werden durch Pressen, Gießen oder Extrudieren hergestellt. Die Dicke der Platten beträgt mehrere Millimeter. Die Platten können profiliert hergestellt werden. Durch Stapeln der Platten entstehen so Feed-, Retentat- und Permeatkanäle.

### Scheiben

Scheiben werden durch Foliengießen hergestellt. Die Dicke der Folien liegt im Bereich von 0,5 mm ... 3 mm. Durch Laminieren von Scheiben lassen sich Folientaschen herstellen (DE 4 330 163).

### Kapillaren

Kapillaren mit einem Außendurchmesser von 10 mm bis etwa 1 mm können über Extrusion hergestellt werden. Unter ungefährer Beibehaltung des Verhältnisses ID/AD=7/10 erhält man bei den Kapillaren nach dem Brennen eine hohe Innendruckfestigkeit vergleichbar mit derjenigen von Einkanalrohren. Die Kapillaren sind starr und einzeln handhabbar.

Ein spezielles Verfahren ist die Schmelzextrusion, bei der ein thermoplastischer organischer Binder verwendet wird und die Formgebung bei erhöhter Temperatur stattfindet (DE 694 00 874).

### Hohlfasern

Von Hohlfasern spricht man bei Außendurchmessern kleiner 1 mm. Dies erfordert beim Extrudieren ein Durchströmen der Kapillaren mit einem Gas, um ein Kollabieren der weichen, plastischen Masse zu verhindern (WO 99/22852). Sehr kleine Durchmesser lassen sich über Spinnen herstellen (JP 05/221752, JP 02/091221). Hierzu wird ein Polymer mit einem keramischen Pulver gefüllt und dieser als Hohlfaser versponnen oder ein Polymer in einem Lösungsmittel gelöst, ein Keramikpulver suspendiert und in ein Fällbad gesponnen. Nach dem Brennen behalten die Hohlfasern eine gewisse Elastizität. Sie lassen sich nicht mehr als Einzelelemente verarbeiten.

Keramische Filterelemente werden in Gehäusen parallel angeordnet. Es entsteht ein Modul, der Anschlüsse für Zulauf (Feed), Ablauf (Retentat) sowie ein Anschluss für das Filtrat (Permeat) und gegebenenfalls einen weiteren für Spülflüssigkeit (Sweep) enthält. Bei Mehrkanalrohren wird die Membran auf der Innenseite der Kanäle aufgebracht und von innen nach außen filtriert. Bei Einkanalrohren, Kapillaren und Hohlfasern gibt es Beispiele, wo die Membran außen oder innen aufgebracht wird. Bei zu kleinen Durchmesser der Kapillaren bzw. Hohlfasern ist eine Innenbeschichtung nicht mehr möglich.

Die Modulform, insbesondere die Art der Fixierung der Membranelemente, die Strömungsverhältnisse und die Baugröße richten sich nach der Art der Supportform und dem speziellen Trennverfahren.

In Rohrmodulen werden die Rohre einzeln eingebaut und durch Dichtringe oder spezielle Dichtkappen (EP 0 270 051, DE 198 46 041, EP 0 270 051) an den Enden zum Gehäuse abgedichtet. Auch wurden Verfahren beschrieben, bei dem an die Enden der Rohre metallische Anschlussstücke angeklebt oder an gelötet werden (DE 4 131 407). Bei Kapillaren und Hohlfasern führt dies zu einem unvertretbar hohem Montageaufwand oder ist auf Grund der Flexibilität bei Hohlfasern gar nicht möglich. Hier sind Methoden gefragt, bei denen eine größere Anzahl der Kapillaren oder Hohlfasern zum Bündel verarbeitet werden.

Unter Verwendung von Waben werden Module beschrieben, bei denen seitlich Bohrungen oder Schlitze eingebracht sind, welche die Permeatkanäle öffnen und den Permeataustritt zur Seite ermöglichen (US 5.855.781, EP 1 060 784).

Filtertaschen werden vorzugsweise mit einem zentrischen Loch versehen und auf ein Permeatsammekohr gefädelt. Man erhält so Stacks, die zu Modulen zusammengebaut werden (DE 4 330 163).

Im Unterschied zu diesen Modulen beschreibt die vorliegende Erfindung einem Modul unter Verwendung keramischer Kapillaren. Auf diesem Gebiet sind folgende technische Lösungen bekannt:

In EP 0 938 921 werden Bündel von Kapillaren bestehend aus glasartigen Kohlenstoffmembranen in eine Form gestellt und mit einem Harz, welches mit einem Feststoff gefüllt ist, ausgegossen, wobei das Harz einer Ultraschallbehandlung ausgesetzt wird.

EP 0 841 086 beschreibt einen Modul mit Hohlfasern, der zum Erzielen einer mechanischen Stabilität Filamente (Stäbe) mit einem Durchmesser zwischen 0,06 mm und 3 mm, im Verhältnis 0,5-fach bis 5-fach zur Anzahl der Hohlfasern enthält, wobei die Hohlfasern und die Stäbe an den Enden durch Lochplatten gehalten werden. In US 01/0035374 werden Hohlfaserbündel stabilisiert, indem um die Bündel herum spiralförmig Filamente gewickelt werden. Eine vergleichbare mechanische Stabilisierung ist bei keramischen Kapillaren gemäß vorliegender Erfindung nicht notwendig.

EP 0 941 759 beschreibt ein Verfahren zur Herstellung eines Austauschers, bei dem ein Bündel von Austauscherrohren in eine Form gestellt und anschließend mit einem Keramikschlicker gefüllt, getrocknet und anschließend zu einer Platte gesintert werden. In einem weiteren Schritt wird auf die gleiche Weise eine Endplatte geformt. In die erste Platte und die Endplatte werden parallel zu den Rohren Sammelrohre für Zufluss und Abfluss eingebracht. Es wird erwähnt, dass eine solche Anordnung für Membranmodule verwendet werden kann, wobei keine Kapillaren verwendet werden und kein anwendungsspezifischer Abstand der Rohre eingestellt wird.

DE 4 133 250 beansprucht ein Verfahren zur Herstellung von Membranröhrchenbündeln, bei dem ein gleichmäßiger Abstand der Membranröhrchen eingestellt wird durch Aurweiten der Enden zu regelmäßigen Vielecken und stoffschlüssiger Verbindung durch Kleben oder Schweißen. Im Unterschied dazu werden die Kapillaren in der vorliegenden Erfindung an den Enden nicht aufgeweitet.

EP 0 092 839 verwendet eine nichtporöse Endplatte, durch die Löcher gebohrt sind, in denen mittels spezieller Anschlüsse poröse Rohre befestigt sind. Die Befestigung erfolgt durch ein Email, Glas, Keramik, Kohlenstoff, Zement oder Metall. In WO 01/87469 wird ein vollkeramischer Modul aufgebaut durch Fügen keramischer Supports mit einem Gehäuse aus gelochten Stirnplatten und zylindrischen Außenmantel. In all diesen Fällen dienen die Lochplatten zur mechanischen Fixierung der Rohre bzw. Kapillaren. Dabei haben die Rohre einen festen Abstand, der aber in keiner Beziehung zum Trennverfahren, insbesondere nicht zur Permeatmenge steht.

JP 61/004509 verwendet einen wässrigen Schlicker einer Mischung von Glas- und Keramikpulver mit angepasstem Ausdehnungskoeffizient zum Vergießen der Enden poröser Glasmembranröhrchen. JP 57166244 beschreibt das Vergießen kleiner Röhrchen mit einem Dichtungsmaterial, z.B. Glas, wodurch eine luftdichte Stirnplatte entsteht. In beiden Fällen wird eine Abdichtung der Enden der Kapillaren und eine mechanische Fixierung erreicht. Es wird jedoch kein anwendungsbezogener, definierter Abstand eingestellt.

US 4.296.052, US 4.224.386 und US 4.219.613 beschreiben die Herstellung von Lochplatten für Hohlfaser-Batterien, die aus einem oberen heliumdichten Bereich und einem darunter liegenden porösen Bereich bestehen und mit einer Vielzahl anorganischer Hohlfasern durchstochen sind. Die Hohlfaserwände dienen dabei als Diaphragmen, durch die kein Stofftransport stattfindet und somit auch kein definierter Abstand zwischen den Hohlfasern erforderlich ist.

Der Erfindung liegt die Aufgabe zugrunde, die geschilderten Mängel des Standes der Technik bei einem Separationsmodul mit bezogen auf die Parameter des speziellen Anwendungsfalles optimaler Raumausnutzung zu beheben.

Diese Aufgabe wird durch die in den Patentansprüchen beschriebene Erfindung gelöst.

Die Erfindung wird an Ausführungsbeispielen näher erläutert.

Die beigefügten Zeichnungen stellen dar:

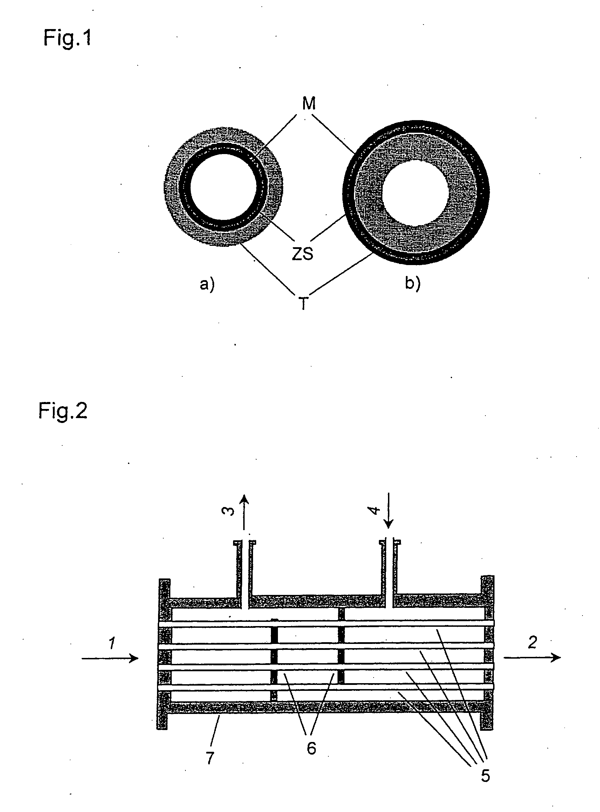

- Fig. 1:: Prinzipieller asymmetrischer Aufbau rohrförmiger Filterelemente mit Träger (T), Zwischenschicht (ZS) und Membran (M) für a) Innenbeschichtung und b) Außenbeschichtung.
- Fig. 2:: Schematische Darstellung eines Separationsmoduls mit den Anschlüssen für Feed (1), Retentat (2), Permeat (3) und Sweep (4) sowie den Filterelementen (5), Umlenkplatten (6) zum Erzeugen einer Zwangsströmung und dem Gehäuse (7).
- Fig. 3:: Prinzip des Fügens mit einer Gießmasse (Anspruch 14) a) Gipsform (8) b) Gipsform (8) mit Kapillaren (9) c) Gipsform (8) mit Kapillaren (9) und ein-gefülltem Gießschlicker (10) d) Kapillar-Bündel mit ungesinterter Stimplatte (11) e) Kapillar-Bündel mit ungesinterter Stimplatte (11) beschnitten f) Kapillar-Bündel mit gesinterter Stimplatte (12).
- Fig. 4:: Lochscheibe (Ansprüche 15 bis 17)
- Fig. 5:: Separationsmodul hergestellt nach einem der Ansprüche 15 bis 17.
- Fig. 6:: Separationsmodul hergestellt nach einem der Ansprüche 15 bis 17 mit Abstandshaltern nach Anspruch 8.
- Fig. 7:: Kapillaren in Folienstreifen eingedrückt (Anspruch 19) a) Draufsicht b) Seitenansicht.
- Fig. 8:: Kapillarbündel nach dem Aufwickeln schematisch im Schnitt dargestellt (Ansprüche 8, 18 und 19).

Die vorliegende Erfindung beschreibt einen Separationsmodul, der mindestens ein Bündel keramischer Kapillaren enthält, bei dem ein Abstand zwischen den Kapillarröhrchen durch Fügen eingestellt wird, was erfindungswesentlich ist. Die Wahl des Abstandes richtet sich nach dem Permeatvolumen, das ohne Behinderung abströmen soll. Das Permeatvolumen wiederum wird von der Art der Membran und des damit verbundenen Anwendungsverfahrens bestimmt, wie an den folgenden Beispielen 1 und 2 zum erfindungsgemäßen Erzeugnis erläutert wird.

### Beispiel 1

Werden Kapillaren einer Länge von 1 m mit einem Außendurchmesser 1 mm und einem Innendurchmesser von 0,7 mm verwendet, so hat ein Bündel von 100 Kapillaren eine Membranfläche von 0,2 m². Der Fluss einer Nanofiltrationsmembran beträgt bei 20 bar ca. 400l/(m².h). Aus dem beschriebenen Bündel würden pro Stunde 80 l austreten. Die äußere Hülle des Bündels würde ca. 40 Schlitze mit einer Länge von 1 m zum Abfließen des Permeates enthalten. Geht man davon aus, dass die gesamte Permeatmenge aus dem Innern des Bündels kommen würde, so treten pro Schlitz 2l/h aus. Bei einer Schlitzbreite von 0,01 mm würde eine Permeatströmungsgeschwindigkeit von 0,05 m/s entstehen, die problemlos beherrscht werden kann.

### Beispiel 2

Betrachtet man das gleiche Kapillarbündel in der Pervaporation, so muss man bei einer Membran mit einem Fluss von bis zu 25 kg H₂O/m² rechnen. Bei 100°C und 1 bar hat Wasserdampf eine Dichte von 1,694 m³/kg. Durch das oben beschriebene Kapillarbündel mit einer Fläche von 0,2 m² ergibt sich ein Permeatvolumen von 8,47 m³/h, welches durch den reduzierten Druck auf der Permeatseite von ca. 20 mbar auf 335 m³/h ansteigt. Pro Schlitz müssen 8,38m³/h Dampf abgeführt werden. Bei gleicher Schlitzbreite wie in Beispiel 1 würde sich der Dampf mit 232,5 m/s bewegen. Übliche Strömungsgeschwindigkeiten in Rohren bei 20 mbar liegen zwischen 25 m/s und 50m/s. Dies würde einer Schlitzbreite von 0,1 mm entsprechen. Um den Druckverlust auf der Permeatseite sehr gering zu halten, wird mit niedrigeren Strömungsgeschwindigkeiten von 2 m/s bis 5 m/s zu gerechnet, was einer Spaltbreite von 1 mm entsprechen würde.

Nachfolgend werden die drei Varianten des erfindungsgemäßen Herstellungsverfahrens zunächst prinzipiell und dann an Hand der Beispiele 3 bis 5 im einzelnen erläutert:

Die Kapillaren werden durch Extrudieren hergestellt und haben einen Außendurchmesser von 0,3 mm bis 10 mm, vorzugsweise 1 mm bis 2,5 mm und einem Innendurchmesser von 0,3 mm bis 8 mm, vorzugsweise 0,7 mm bis 1,5 mm.

Die Herstellung der Kapillarbündel erfolgt in einer ersten Variante durch Vergießen der Enden mit einer polymer-, keramik- und/oder glashaltigen Gießmasse. Hierzu werden die Kapillaren mit den Enden in becherähnliche Gießformen gestellt, die zur Fixierung der Kapillaren im Boden Löcher mit definiertem Lochabstand haben. Der Becher wird mit der Gießmasse gefüllt. Die Gießmasse umschließt die Kapillaren vollständig und trocknet an Luft und bei Raumtemperatur soweit, dass der Becher entfernt werden kann. Die Aushärtung erfolgt bei polymeren Gießmassen z.B. mit Epoxidharzen bei Raumtemperatur unter Zusatz eines Härters oder mit Einkomponentenharzen bei etwas erhöhter Temperatur. Bei Verwendung keramikund/oder glashaltiger Gießmassen erfolgt die Aushärtung thermisch bei Temperaturen zwischen 150°C und 1600°C. Die Prozedur wird an den beiden Enden des Kapillarbündels gleichzeitig oder nacheinander durchgeführt. Bei Gleichzeitigkeit wird eine Gießmasse verwendet, die nach kurzer Ablüftzeit formstabil ist. Durch Abschneiden oder Schleifen der Enden des Bündels werden die beim Vergießen teilweise verschlossenen Kanäle wieder geöffnet.

Der erfindungswesentliche definierte Abstand wird bei dieser Variante durch das Lochmuster in der Bodenplatte der Gießform und der Gesamtschwindung des Formlings festgelegt und kann in Bereich von 0,05mm bis 10mm variiert und entsprechend dem erwarteten Flusswerten der Membran ausgewählt werden.

In einer zweiten Variante erfolgt die Einstellung des Abstandes definiert unter Verwendung von Lochplatten. Die Lochplatten können aus unterschiedlichem Material, z.B. Kunststoff, Metall oder Keramik bestehen. Die Löcher der Lochplatte sind im Durchmesser geringfügig größer als der Durchmesser der Kapillaren. Die Kapillaren werden in die Löcher der Lochplatte eingesteckt.

Im Fall von Lochplatten aus Kunststoff, Metall oder gesinterter Keramik erfolgt das Fügen unter Verwendung polymer-, keramik- oder glashaltiger Schlicker, Pasten oder Kleber. Hierzu werden die Lochplatten ganz oder teilweise in das Fügematerial getaucht oder das Fügematerial in die Hohlräume zwischen Lochwand und Kapillaraußenseite gefüllt. Zunächst erfolgt eine Trocknung bei Raumtemperatur an Luft. Die Aushärtung erfolgt bei polymeren Gießmassen z.B. mit Epoxidharzen bei Raumtemperatur unter Zusatz eines Härters oder mit Einkomponentenharzen bei etwas erhöhter Temperatur. Bei Verwendung keramik- und/oder glashaltiger Gießmassen erfolgt die Aushärtung thermisch bei Temperaturen zwischen 150°C und 1600°C. Die Prozedur wird an den beiden Enden des Kapillarbündels gleichzeitig oder nacheinander durchgeführt. Bei Gleichzeitigkeit wir eine pastöses Fügematerial verwendet, das nach kurzer Ablüftzeit formstabil ist.

Zur Herstellung des Kapillarbündels können auch ungesinterte keramische Lochplatten verwendet werden. Hierzu werden die keramischen Kapillaren in die Lochplatte eingesteckt. Anschließend erfolgt eine thermische Behandlung in Höhe der Sintertemperatur der Lochplatte, wobei diese durch ihre Schwindung auf die Kapillaren aufschrumpft, so dass eine mechanisch stabile und dichte Verbindung entsteht.

Es ist ebenfalls möglich, ungesinterte keramische Kapillaren in ungesinterte keramische Lochplatten zu stecken und im Anschluss daran beides gemeinsam zu brennen (Co-firing).

Sollte das Fügen zum Verschließen der Kanäle der Kapillaren führen, so werden diese durch Abschneiden oder Schleifen der Enden des Bündels wieder geöffnet. Der definierte Abstand wird in diesem Fall durch das Lochmuster in der Lochplatte festgelegt und kann in Bereich von 0,1 mm bis 10 mm variiert und entsprechend dem erwarteten Flusswerten der Membran ausgewählt werden.

In einer dritten Variante wird ein definierter Abstand zwischen den keramischen Kapillaren dadurch eingestellt, das die Kapillaren mit streifenförmigen Folien eines aushärtbaren Materials aufgewickelt werden.

Die Aushärtung erfolgt bei polymeren Folien bei etwas erhöhter Temperatur. Bei Verwendung keramik- und/oder glashaltiger Folien erfolgt die Aushärtung thermisch zwischen 150°C und 1600°C. Die Prozedur wird an den beiden Enden des Kapillarbündels gleichzeitig durchgeführt. Zusätzlich zu den Enden des Kapillarbündels können gleichzeitig Streifen in bestimmten Abständen über die Länge des Bündels verteilt eingewickelt werden, die nach der Aushärtung als feste, dichte Distanzelemente wirken. Durch Änderung des Wickelalgorithmus lassen sich schmale sekantenförmige Ausschnitte in den kreisförmigen Distanzelement einstellen, die ähnlich wie Umlenkbleche eine Zwangsführung der Strömung bewirken.

Das Aufwickeln kann auch mit ungesinterten keramischen Kapillaren und ungesinterten keramischen Folien erfolgen. In diesem Fall wird eine feste und dichte Verbindung durch Co-firing bei Temperaturen bis zu 1700°C erreicht.

Der definierte Abstand wird in diesem Fall durch die Dicke der Fügefolie und den Wickelalgorithmus bestimmt und kann im Bereich von 0,1 mm und 1 mm variiert und entsprechend den erwarteten Flusswerten der Membran ausgewählt werden.

Im Ergebnis dieser Fügeprozesse entstehen Kapillarbündel, die in typischer Weise einen Durchmesser zwischen 10 mm und 250 mm, vorzugsweise zwischen 20 mm und 50 mm aurweisen. Der Abstand der Kapillaren im Bündel beträgt ≤ 3 mm. In einem Modul werden vorzugsweise mehrere dieser so hergestellten Kapillarbündel parallelgeschaltet. Das Gehäuse kann dabei aus Edelstahl bestehen und die Abdichtung von Feed- und Permeationsraum durch einen Elastomer-O-Ring erfolgen.

Für höchste Ansprüche an die chemische und thermische Beständigkeit wird das Gehäuse aus Keramik gefertigt. Die Formgebung der Gehäuseteile erfolgt dann über Gießen und/oder durch mechanische Bearbeitung keramischer Hubel im lederharten Zustand. Die Verbindung von Gehäuse und Kapillarbündel bei gleichzeitiger Trennung von Feed- und Permeationsraum erfolgt bei gesinterten Gehäuseteilen durch Fügen mit keramik- oder glashaltigem Schlicker, Paste oder Kleber mit anschließender thermischer Behandlung bei Temperaturen zwischen 500°C und 1400°C.

Für Anwendungen des Separationsmoduls in der Flüssigfiltration, Gastrennung oder Pervaporation ist eine Membranschicht auf den porösen keramischen Kapillaren notwendig. Die Membranschicht kann sich grundsätzlich sowohl auf der Innenseite der Kapillaren, als auch auf ihrer Außenseite befinden. Die Membranschichten werden durch verschiedene Verfahren der Schlickerbeschichtung, Sol-Gel-Technik oder der Aufkristallisation aus Lösung hergestellt. In allen Fällen schließt sich eine thermische Behandlung (Einbrennen) der Membranschicht bei Temperaturen >300°C an. Bei Verwendung kunststoffhaltiger Gießmassen, Lochplatten oder Fügefolien aus Kunststoff ist eine thermische Behandlung des Kapillarbündels bei solch hohen Temperaturen nicht möglich. In diesem Fall wird die Membran vor dem Fügen zum Kapillarbündel aufgebracht. Handelt es sich jedoch um einen vollkeramischen Kapillarbündel bzw. Modul so erfolgt die Beschichtungen zumindest teilweise nach Fertigstellung des Kapillarbündels bzw. des Moduls.

### Beispiel 3

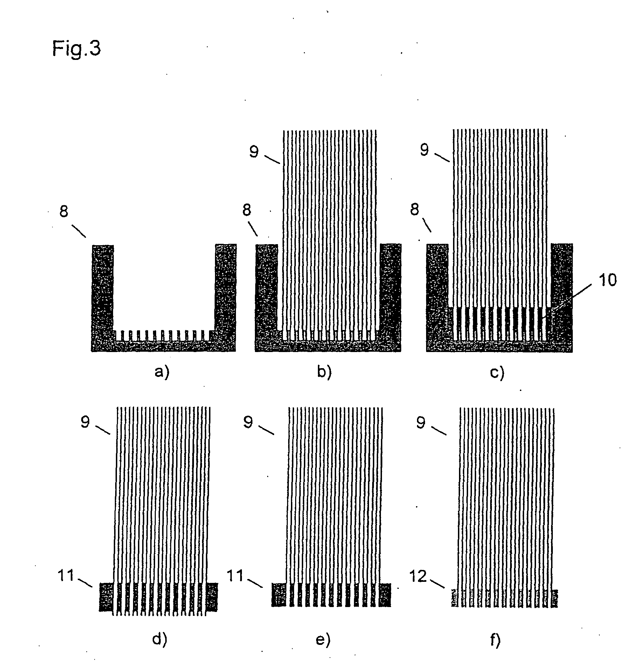

### Kapillarbündel mit Gießmasse fügen (Fig. 3)

Gesinterte poröse Kapillaren 9 mit einem Außendurchmesser von 3,6 mm und einem Innendurchmesser von 2,0 mm, bestehend aus 99,8 % Aluminiumoxid werden auf eine Länge von 350 mm geschnitten. Für die Gießmasse wird ein hochtonerdehaltiger Porzellanschlicker hergestellt, dessen Hauptbestandteile 52 % Ton, 11 % Quarz, 13 % Feldspat, 26 % Aluminiumoxid, 31 % Wasser (bezogen auf Feststoff), 0,5 % Wasserglas (bezogen auf Feststoff) und 0,2 % Soda (bezogen auf Feststoff) sind. Die für das Gießen verwendete Gießform 8 besteht aus Formengips. Im Boden der Gießform befinden sich 19 Löcher mit einem Durchmesser von 3,6 mm und einer Tiefe von 8 mm (Fig. 3a). Der Innendurchmesser der Gießform beträgt 27 mm. Die Kapillaren 9 werden in die Löcher des Formenbodens gesteckt (Fig. 3b) und der in einer Trommelmühle entsprechend der Versatzvorgabe hergestellte Schlicker 10 wird manuell und kontinuierlich in die Gießform gefüllt (Fig. 3c). Das Entformen der ungebrannten Stirnplatte 11 ist im lederharten Zustand bei einer Restfeuchte von 12-15 % möglich (Fig. 3d). Danach erfolgt die Weißtrocknung bis zu einer Restfeuchte von 2 %. Das Fügen der zweiten Seite des Kapillarbündels erfolgt auf die gleiche Weise. Anschließend werden am getrockneten Kapillarbündelrohling die an den Stirnseiten überstehenden Kapillaren mit einer Diamanttrennscheibe abgeschnitten und die Stirnseiten verputzt (Fig. 3e). Der sich daran anschließende Brennzyklus besteht aus folgenden Stufen: 1) Aufheizphase, 2) Oxidierende Reinigungsphase, 3) Reduzierende Scharffeuerphase, 4) Oxidierende Abkühlphase. Das Sintern des Bündels erfolgt liegend bei einer Sintertemperatur von 1470°C und einer Haltezeit von 45 min. Eine Nachbearbeitung des Bündels mit der gesinterten Stimplatte 12 ist nicht erforderlich (Fig. 3f).

### Beispiel 4

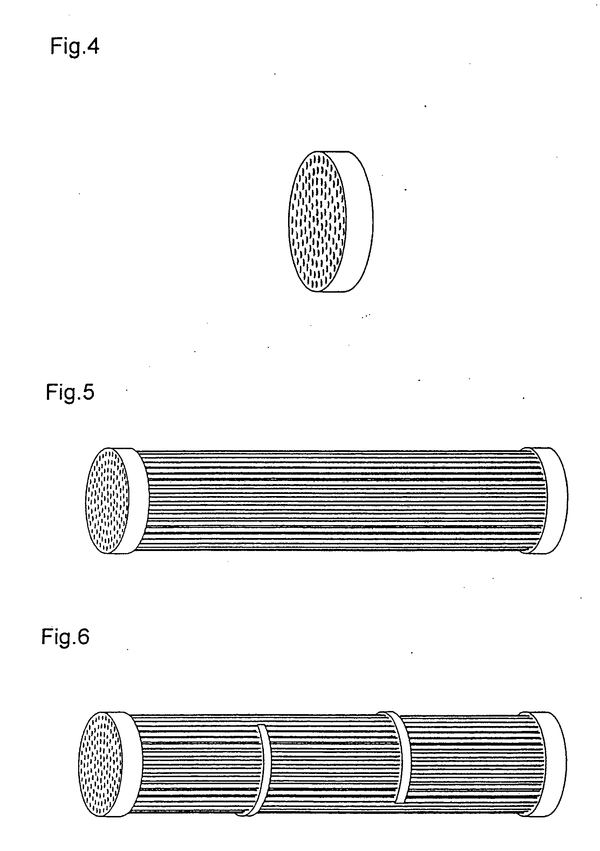

### Kapillarbündel mit Lochplatte (Fig. 4 bis 6)

Gesinterte poröse Kapillaren mit einem Außendurchmesser von 2,9 mm und einem Innendurchmesser von 2,0 mm, bestehend aus 99,8 % Aluminiumoxid werden auf eine Länge von 320 mm geschnitten. Die Lochplatten (Fig. 4) an den Enden des Kapillarbündels bestehen aus dichtem Aluminiumoxid. Sie haben einen Außendurchmesser von 32 mm und 55 gleichmäßig in Segmenten angeordnete Löcher mit 2,9mm Durchmesser. Beide Werkstoffe haben einen linearen thermischen Ausdehnungskoeffizienten von (7,6-7,8)10⁻⁶ K⁻¹. Zur Herstellung der Lochplatten wird Aluminiumoxidpulver mit einer mittleren Korngröße von 0,8 µm, dotiert mit MgO, steifplastisch extrudiert. Zur Plastifizierung des Aluminiumoxids wird dieses gemeinsam mit 5 % wasserlöslicher Zellulose, 3 % nichtionischem Tensid, 2 % Wachs und 10 % Wasser in einen Doppelwellenkneter gegeben. Nach einer Knetzeit von ca. 2 h wird die steifplastische Masse auf einem Vakuum-Schneckenextruder als Lochstrang mit einer Länge von 750 mm extrudiert. Das Werkzeug für den Lochstrang besteht aus einer Hülse, deren Innendurchmesser 35,5 mm ist, und 55 Stiften, deren Durchmesser 3,2 mm beträgt. Die Trocknung der Formlinge erfolgt im Klimaschrank beginnend bei 28°C und 100 % Feuchte. Zu diesem Zeitpunkt beträgt die Feuchte der Formlinge noch 10 %. Nach 72 Stunden ist die Trocknung abgeschlossen. Die Feuchte der Rohlinge liegt bei 2 %. Die getrockneten Rohlinge werden auf eine Länge von 10 mm getrennt und 55 Kapillaren so in 2 Lochplatten gesteckt, das die Enden der Kapillaren jeweils mit den Lochplattenstirnseiten abschließen (Fig. 5). In dieser Position werden die Enden mit einem organischen Kleber fixiert. Nach einer Trocknung von 2 Stunden bei 80°C werden die Kapillarbündelrohlinge liegend bei 1580°C unter oxidierender Atmosphäre gesintert. Während des Sinterprozesses brennt die gesamte Organik aus und kommt es zum Aufschwinden der Lochplatte auf die Kapillaren. Es entsteht eine feste Verbindung. Abschließend werden die Lochpattenstirnseiten mit einem Glas gasdicht abgedichtet. Fig. 6 zeigt eine Ausführungsform mit Abstandshaltern zur Steuerung der Strömung zwischen den Kapillaren.

### Beispiel 5

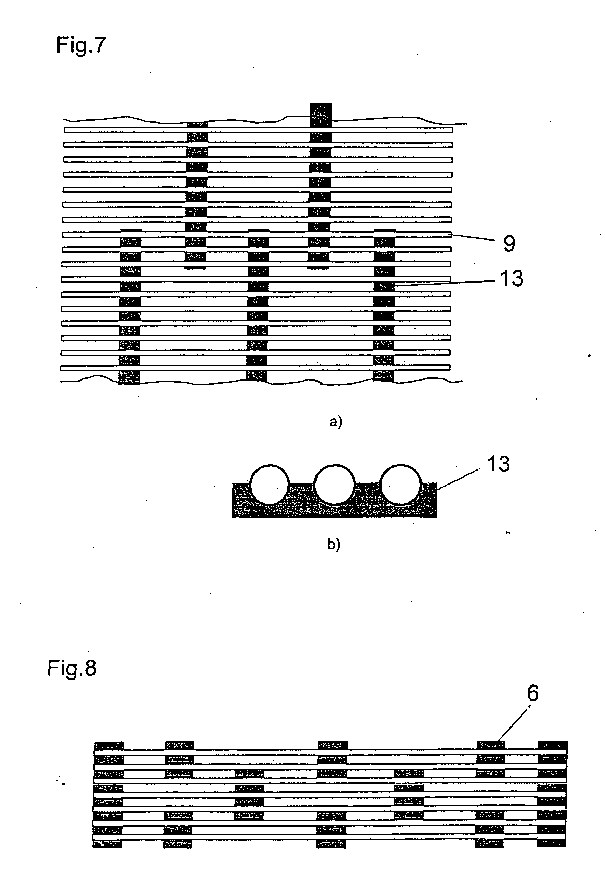

### Kapillarbündel aufgewickelt mit Folienstreifen (Fig. 7 und 8)

Gesinterte poröse Kapillaren 9 mit einem Außendurchmesser von 1,4 mm und einem Innendurchmesser von 1,0 mm, bestehend aus 99,8 Aluminiumoxid werden auf eine Länge von 350 mm geschnitten. Diese geschnittenen Stücke werden, wie in Figur 7 dargestellt, parallel in weiche keramische Folienstreifen 13 eingedrückt. Diese keramischen Folienstreifen 13 haben eine Dicke von 2 mm. Anschließend wird die Kombination von Kapillaren 9 und Streifen 13 zu einem Bündel aufgewickelt, wie in Figur 8 dargestellt. Durch das versetzte Anbringen der Folienstreifen 13 entstehen zwischen den Kapillaren 9 durch Umlenkplatten 6 getrennte Kammern genau definierter Größe, so dass der Modul später mäanderförmig durchströmt werden kann. Als weiterer Verarbeitungsschritt schließt sich das Vergießen der Enden an, das analog zu Beispiel 3 durchgeführt wird, wobei auf den Formboden verzichtet werden kann, da die Kapillaren des Bündels durch die Streifen im richtigen Abstand gehalten werden.

### Aufstellung der verwendeten Bezugszahlen

- 1: Feed (Zufuhr)
- 2: Retentat
- 3: Permeat
- 4: Sweep (Spülflüssigkeit)
- 5: Filterelement
- 6: Umlenkplatte
- 7: Gehäuse
- 8: Gipsform
- 9: Kapillare
- 10: Gießschlicker
- 11: ungesinterte Stimplatte
- 12: gesinterte Stirnplatte
- 13: Folienstreifen

## Patentansprüche

1. Separationsmodul, **dadurch gekennzeichnet, dass** er mindestens ein Bündel keramischer Kapillaren (9) enthält, bei dem zur Steuerung des Stofftransportes und der Strömung im Separationsmodul ein bestimmter Abstand zwischen den Kapillaren (9) durch Fügen eingestellt ist.

2. Separationsmodul, insbesondere nach Anspruch 1, wenigstens aufweisend mindestens ein Bündel keramischer permeabler Kapillaren, die an ihren Enden durch eine Lochscheibe zusammengefasst sind und ein das Kapillarbündel umgebendes Gehäuse mit Zu und/oder Ableitungen zu dem Kapillarinneren für einen ersten Stoffstrom und mit Zu- und/oder Ableitungen für einen zweiten Stoffstrom zu dem Kapillarzwischenraum, **dadurch gekennzeichnet** der Abstand zwischen den Kapillaren mittels Distanzstücken (6) konstant gehalten ist.

3. Separationsmodul nach Anspruch 1 oder 2, **dadurch gekennzeichnet, dass** die Kapillarbündel Kapillaren (9) mit einem Außendurchmesser im Bereich von 0,3 mm bis 10 mm, vorzugsweise 1 mm bis 2,5 mm und einem Innendurchmesser von 0,1 mm bis 8 mm, vorzugsweise 0,7 mm bis 1,5 mm enthält.

4. Separationsmodul nach einem der Ansprüche 1 bis 3, **dadurch gekennzeichnet, dass** der Abstand der Kapillaren (9) im Kapillarbündel ≤ 10 mm, vorzugsweise < 5 mm beträgt.

5. Separationsmodul nach einem der Ansprüche 1 bis 4, **dadurch gekennzeichnet, dass** der Abstand zwischen den Kapillaren (9) im Bündel abhängig vom Permeatfluss und Permeatmedium eingestellt ist.

6. Separationsmodul nach einem der Ansprüche 1 bis 5, **dadurch gekennzeichnet, dass** die Kapillarbündel einen Durchmesser zwischen 10 mm und 250 mm, vorzugsweise zwischen 20 mm und 50 mm aufweisen.

7. Separationsmodul nach einem der Ansprüche 1 bis 6, **dadurch gekennzeichnet, dass** die Kapillaren (9) auf der Innenseite eine dünne, trennaktive Membran (M) aufweisen.

8. Separationsmodul nach einem der Ansprüche 1 bis 6, **dadurch gekennzeichnet, dass** die Kapillaren (9) auf der Außenseite eine dünne, trennaktive Membran (M) aufweisen.

9. Separationsmodul nach einem der Ansprüche 1 bis 8, **gekennzeichnet durch** eingebaute Abstandshalter als Umlenkplatten (6) zur Steuerung der Strömung im Raum zwischen den Kapillaren (9).

10. Separationsmodul nach einem der Ansprüche 1 bis 9, **dadurch gekennzeichnet, dass** mehrere Kapillarbündel in einem Gehäuse parallelgeschaltet sind.

11. Separationsmodul nach Anspruch 10, **dadurch gekennzeichnet, dass** das Gehäuse aus Edelstahl besteht und die Abdichtung des Lochscheibenumfang zur Trennung von Feed- und Permeationsraum durch einen Elastomer-O-Ring, eine Graphitdichtung oder eine Dichtungsmasse erfolgt.

12. Separationsmodul nach Anspruch 10, **dadurch gekennzeichnet, dass** das Gehäuse aus Keramik besteht und Abdichtung des Lochscheibenumfang zur Trennung von Feed- und Permeationsraum an Fügestellen durch keramikoder glashaltigem Schlicker, Paste oder Kleber erfolgt.

13. Separationsmodul nach einem der Ansprüche 1 bis 12 zum Einsatz als Membranreaktor, **dadurch gekennzeichnet, dass** die einzelnen Kapillaren mit einem Katalysator beschichtet sind, selber Katalysator sind oder der Katalysator sich an anderer Stelle im Modul befindet.

14. Verfahren zur Herstellung eines Separationsmoduls nach einem der Ansprüche 1 bis 13, **dadurch gekennzeichnet, dass** das Fügen erfolgt, indem vorgeformte Kapillaren (9) untereinander parallel und in einem durch Erfordernisse des Stofftransportes und der Strömung im späteren Separationsmodul bestimmten Abstand in Bündelform fixiert und zumindest in den Ebenen der beiden Stirnflächen des künftigen Separationsmoduls stoffschlüssig verbunden werden.

15. Verfahren nach Anspruch 14, **dadurch gekennzeichnet, dass** gesinterte keramische Kapillaren (9) in Bohrungen am Boden einer Form (8) gestellt werden, diese Form (8) mit einer polymer-, keramik- und/oder glashaltigen Gießmasse (10) ausgegossen wird und nach dem Entformen die überstehenden Ende der Kapillaren (9) abgetrennt werden.

16. Verfahren nach Anspruch 14, **dadurch gekennzeichnet, dass** gesinterte keramische Kapillaren in Lochscheiben aufgesteckt und die Fugen zwischen beiden unter Verwendung von polymer-, keramik- oder glashaltiger Schlicker, Pasten oder Kleber abgedichtet werden.

17. Verfahren nach Anspruch 14, **dadurch gekennzeichnet, dass** gesinterte keramische Kapillaren in ungesinterte keramische Lochscheiben gesteckt und durch Aufschrumpfen der Lochscheibe fest verbunden werden.

18. Verfahren nach Anspruch 14, **dadurch gekennzeichnet, dass** ungesinterte keramische Kapillaren in ungesinterte keramische Lochscheiben gesteckt und durch Co-firing fest verbunden werden.

19. Verfahren nach Anspruch 14, **dadurch gekennzeichnet, dass** gesinterte keramische Kapillaren (9) mit wenigstens einem Streifen (13) polymer-, keramik- und/oder glashaltiger Folie, Geflechte oder Gewebe aufgewickelt und durch Aufschrumpfen beim Aushärten der Folie fest verbunden werden.

20. Separationsmodul nach Anspruch 14, **dadurch gekennzeichnet, dass** ungesinterte keramische Kapillaren (9) mit wenigstens einem Streifen (13) keramik- und/oder glashaltiger Folie, Geflechte oder Gewebe aufgewickelt und durch Co-firing fest verbunden werden.

21. Verfahren nach einem der Ansprüche 14 bis 20 zur Herstellung von Kapillarbündeln nach Anspruch 6 oder 7, **dadurch gekennzeichnet, dass** im Fall eines vollkeramischen Kapillarbündels die Beschichtung mit der trennaktiven Membran (M) nach Fertigstellung des Kapillarbündels in einem Schritt erfolgen kann.

22. Verfahren nach einem der Ansprüche 14 bis 20 zur Herstellung von Kapillarbündeln nach Anspruch 6 oder 7, **dadurch gekennzeichnet, dass** bei Verwendung eines nichtkeramischen Bestandteils zur Herstellung des Kapillarbündels die Kapillaren vor Einbau in den Modul mit einer trennaktiven Membran (M) beschichtet werden.

23. Verfahren zur Verwendung eines Separationsmoduls nach einem der Ansprüche 1 bis 15, **dadurch gekennzeichnet, dass** er in Membranverfahren eingesetzt wird, in denen ein Vakuum auf der Permeatseite (3) angelegt wird.
